# FASCICULE DE BREVET EUROPEEN

(11) **EP 1 729 883 B1**
(45) Date de publication et mention de la délivrance du brevet: **30.03.2011**
(21) Numéro de dépôt: 05733136.5
(22) Date de dépôt: 25.02.2005
(51) Int. Cl.: B01J 21/08

(54) **COMPOSITION A BASE D'OXYDES DE ZIRCONIUM, DE PRASEODYME, DE LANTHANE OU DE NEODYME, PROCEDE DE PREPARATION ET UTILISATION DANS UN SYSTEME CATALYTIQUE**
ZUSAMMENSETZUNG AUF BASIS VON ZIRCONIUM-, PRASEODYM-, LANTHAN- ODER NEODYMOXID, ZUGEHÖRIGES HERSTELLUNGSVERFAHREN UND VERWENDUNG IN EINEM KATALYTISCHEN SYSTEM
COMPOSITION BASED ON OXIDES OF ZIRCONIUM, PRASEODYMIUM, LANTHANUM OR NEODYMIUM, METHOD FOR THE PREPARATION AND USE THEREOF IN A CATALYTIC SYSTEM

(30) Priorité: 26.02.2004 FR 0401948
(43) Date de publication de la demande: 13.12.2006
(73) Titulaire: RHODIA CHIMIE, 92512 Boulogne Billancourt Cedex (FR)
(72) Inventeur: LARCHER, Olivier, F-17180 PERIGNY (FR); MOISSONNIER, Philippe, F-17138 PUILBOREAU (FR); ROHART, Emmanuel, F-17220 SAINTE SOULLE (FR)
(74) Mandataire: Dubruc, Philippe
(86) Numéro de dépôt international: PCT/FR2005/000455
(87) Numéro de publication internationale: WO 2005/082782

(56) Documents cités:
- EP-A- 0 955 267
- EP-A- 1 035 074
- EP-A- 1 285 881
- WO-A-98/45212
- FR-A- 2 736 343
- FR-A- 2 829 129
- US-A- 5 252 316

## Description

La présente invention concerne une composition à base d'oxyde de zirconium, d'un additif choisi parmi les oxydes de praséodyme, de lanthane et de néodyme, son procédé de préparation et son utilisation dans un système catalytique.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseur capables d'opérer non seulement l'oxydation du monoxyde de carbone et des hydrocarbures présents dans les gaz d'échappement mais également la réduction des oxydes d'azote également présents dans ces gaz (catalyseurs "trois voies"). Les catalyseurs à base d'oxyde de zirconium ou d'oxyde de cérium sont aujourd'hui connus comme particulièrement intéressants pour ce type de réactions.

Ainsi, EP 1 035 074 A décrit une composition qui est à base d'oxyde de zirconium et d'oxyde de cérium avec un autre élément choisi notamment parmi les terres rares et qui peut contenir en outre une quantité spécifique de soufre.

EP 955 267 A décrit aussi une composition qui est à base essentiellement d'oxyde de zirconium et d'oxyde de cérium avec, éventuellement, un autre élément choisi notamment parmi les terres rares.

WO 98/45212 A concerne toujours des compositions à base d'oxydes de zirconium et de cérium.

FR 2 736 343 A décrit aussi une composition à base d'oxyde de zirconium et d'oxyde de cérium avec, éventuellement, un élément dopant tel que les terres rares; les alcalino-terreux; l'aluminium; le thorium; le scandium; le gallium; le titane; le vanadium; le niobium; le tantale.

US 5 252 316 A concerne une zircone qui est stabilisée par de l'oxyde d'yttrium et/ou de magnésium.

FR 2 829 129 A concerne une composition à base d'oxyde de zirconium et, dans une proportion en poids d'au moins 47%, d'oxyde de cérium et d'une autre terre rare.

Pour être efficaces, ces catalyseurs doivent présenter une surface spécifique importante et on cherche toujours des catalyseurs susceptibles de pouvoir être utilisés à des températures de plus en plus hautes et, pour cela, présentant une stabilité améliorée de leur surface spécifique.

L'objet de l'invention est donc la mise au point d'une composition catalytique pouvant répondre à cette caractéristique.

Dans ce but, la composition de l'invention consiste en de l'oxyde de zirconium et en au moins un additif choisi parmi les oxydés de praséodyme, de lanthane et de néodyme et elle est caractérisée en ce qu'elle présente une surface spécifique d'au moins 29 m²/g, après calcination à 1000°C pendant 10 heures.

La composition de l'invention a donc pour avantage de conserver une surface spécifique à une valeur élevée à une température de 1000°C ou même plus. En outre, les catalyseurs à base de cette composition peuvent présenter aussi une efficacité importante à basse température même avec une teneur faible en métal précieux.

D'autres caractéristiques, détails et avantages de l'invention apparaîtront encore plus complètement à la lecture de la description qui va suivre, ainsi que des divers exemples concrets mais non limitatifs destinés à l'illustrer.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

La classification périodique des éléments à laquelle il est fait référence dans la présente description est celle publiée dans le Supplément au Bulletin de la Société Chimique de France n° 1 (janvier 1966). Par terre rare on entend les éléments du groupe constitué par l'yttrium et les éléments de la classification périodique de numéro atomique compris inclusivement entre 57 et 71.

En outre, les calcinations à l'issue desquelles sont données les valeurs de surface sont des calcinations sous air sauf indication contraire.

Les teneurs sont données en oxydes sauf indication contraire.

Les caractéristiques principales des compositions de l'invention sont la nature de leurs constituants et leur surface spécifique.

Les compositions de l'invention sont à base d'oxyde de zirconium ZrO₂, cet oxyde étant le constituant essentiel ou majoritaire. Les compositions comprennent en outre au moins un additif, qui constitue le reste de la composition et qui est présent sous la forme d'un oxyde, cet additif étant choisi parmi le praséodyme, le lanthane et le néodyme. On notera ici que l'invention couvre bien entendu le cas de compositions comprenant plusieurs additifs en combinaison.

La teneur en additif est d'au plus 50% en masse, l'oxyde de zirconium constituant au moins 50% en masse de la composition. Cette teneur est exprimée en masse d'oxyde de l'additif ou de l'ensemble des additifs dans le cas de compositions à plusieurs additifs, par rapport à la masse de la composition dans son ensemble (oxyde de zirconium et oxyde(s) d'additif(s)). Cette teneur en additif peut varier dans une large gamme et elle peut être plus notamment comprise entre 5% et 40% et plus particulièrement entre 10% et 40%. Cette teneur peut être tout particulièrement comprise entre 10% et 30%.

Selon une variante, les compositions de l'invention peuvent comprendre en outre de l'oxyde d'aluminium Al₂O₃. Dans ce cas, la teneur en aluminium (% massique d'Al₂O₃ par rapport à l'ensemble de la composition) est généralement d'au plus 20% et, de préférence, elle est comprise entre 1% et 10%.

Selon une autre variante, les compositions de l'invention peuvent comprendre en outre de la silice dans des proportions identiques à celles données ci-dessus pour l'alumine.

L'autre caractéristique principale des compositions de l'invention est leur surface spécifique élevée à haute température.

Comme indiqué plus haut, cette surface est d'au moins 29 m²/g, après calcination à 1000°C pendant 10 heures. Dans les mêmes conditions de calcination, cette surface peut être d'au moins 35 m²/g, et même d'au moins 40 m²/g et encore plus préférentiellement d'au moins 50 m²/g. Des surfaces d'environ 60 m²/g peuvent être atteintes.

A des températures de calcination encore plus élevée, les compositions de l'invention gardent des surfaces importantes. Ainsi, après calcination à 1100°C pendant 4 heures, ces compositions peuvent présenter une surface spécifique d'au moins 10 m²/g ou même d'au moins 15 m²/g. Des surfaces de 20 m²/g environ peuvent être obtenues.

Par ailleurs, après calcination à 1200°C pendant 10 heures, les compositions de l'invention peuvent encore présenter une surface spécifique d'au moins 2 m²/g, plus particulièrement d'au moins 3 m²/g.

A des températures plus basses que celles qui ont été mentionnées ci-dessus, par exemple après calcination à 900°C pendant 4 heures, et selon des variantes de l'invention, les compositions peuvent présenter une surface spécifique d'au moins 45 m²/g, plus particulièrement d'au moins 50 m²/g et de préférence d'au moins 55 m²/g et encore plus préférentiellement d'au moins 70 m²/g. Des surfaces de 80 m²/g environ peuvent être obtenues.

Les compositions de l'invention peuvent se présenter dans certains cas sous la forme de solutions solides de l'additif dans l'oxyde de zirconium.

Dans ce cas, les diagrammes en diffraction RX de ces compositions révèlent l'existence d'une phase unique et correspondant à celle d'un oxyde de zirconium cristallisé dans le système cubique ou dans le système quadratique, traduisant ainsi l'incorporation de l'additif dans le réseau cristallin de l'oxyde de zirconium, et donc l'obtention d'une solution solide vraie. Les compositions peuvent aussi se présenter sous la forme d'un mélange de phases, notamment dans le cas des fortes teneurs en additif, c'est à dire d'au moins 40%.

Les compositions de l'invention présentent par ailleurs une porosité spécifique. Elles contiennent en effet des mésopores, c'est à dire des pores dont la taille est comprise entre 10 nm et 500 nm et ceci même après calcination à température élevée. Ces valeurs de taille sont obtenues par porosimétrie au mercure (analyse faite avec un porosimètre Autopore 9410 de Micromeritic's comprenant deux postes basse pression et un poste haute pression). Ces mésopores peuvent contribuer à une part importante du volume poreux total, par exemple elles peuvent apporter au moins 30%, plus particulièrement au moins 40% du volume poreux total.

Les compositions de l'invention peuvent présenter une teneur très faible en anion sulfate. Cette teneur est généralement d'au plus 100 ppm et de préférence d'au plus 50 ppm (rapport massique SO₄⁻/ensemble de la composition).

Le procédé de préparation des compositions de l'invention va maintenant être décrit.

Ce procédé est caractérisé en ce qu'il comprend les étapes suivantes :
- (a) on forme un mélange comprenant des composés du zirconium, de l'additif et, le cas échéant, de l'aluminium ou du silicium;
- (b) on met en présence ledit mélange avec un composé basique ce par quoi on obtient un précipité;
- (c) on chauffe en milieu liquide ledit précipité;
- (d) on ajoute au précipité obtenu à l'étape précédente un composé choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e) on calcine le précipité ainsi obtenu.

La première étape du procédé consiste donc à préparer un mélange en milieu liquide d'un composé du zirconium, d'un composé de l'additif et éventuellement d'un composé d'aluminium ou de silicium.

Le mélange se fait généralement dans un milieu liquide qui est l'eau de préférence.

Les composés sont de préférence des composés solubles. Ce peut être notamment des sels de zirconium, de l'additif et de l'aluminium. Ces composés peuvent être choisis par exemple parmi les nitrates, les acétates ou les chlorures.

A titre d'exemples, on peut ainsi citer le nitrate de zirconyle ou le chlorure de zirconyle. Le nitrate de zirconyle est utilisé le plus généralement.

Il est aussi possible d'utiliser un sol comme composé de départ du zirconium. Par sol on désigne tout système constitué de fines particules solides de dimensions colloïdales, c'est à dire des dimensions comprises entre environ 1nm et environ 500nm, à base d'un composé de zirconium ce composé étant généralement un oxyde et/ou un oxyde hydraté de zirconium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le zirconium peut se trouver soit totalement sous la forme de colloïdes, soit simultanément sous la forme d'ions et sous la forme de colloïdes.

Comme composés du silicium, on peut utiliser un silicate d'un élément alcalin, par exemple le sodium, un alkoxyde de silicium ou encore un alkyl siliconate d'un élément alcalin comme le sodium ou le potassium et on peut citer comme exemple le méthyl siliconate de potassium. On peut aussi utiliser une solution d'acide silicique ou une silice de précipitation que l'on peut obtenir à partir des précurseurs précédents. On peut aussi mentionner comme composé du silicium une silice pyrogénée par exemple du type Aerosil® de la société Degussa. La silice peut se présenter sous la forme d'un sol ou d'une suspension.

Le mélange de départ peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Dans la deuxième étape (b) du procédé, on met en présence ledit mélange avec un composé basique. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée.

Le composé basique est généralement utilisé sous forme d'une solution aqueuse.

La manière d'effectuer la mise en présence du mélange et de la solution, c'est à dire l'ordre d'introduction de ceux-ci n'est pas critique. Toutefois, cette mise en présence peut se faire en introduisant le mélange dans la solution du composé basique.

La mise en présence ou la réaction entre le mélange et la solution, notamment l'addition du mélange dans la solution du composé basique, peut être effectuée en une seule fois, graduellement ou en continu, et elle est de préférence réalisée sous agitation. Elle est de préférence conduite à température ambiante (20-25°C).

L'étape suivante (c) du procédé est l'étape de chauffage du précipité en milieu liquide.

Ce chauffage peut être réalisé directement sur le milieu réactionnel obtenu après réaction avec le composé basique ou sur une suspension obtenue après séparation du précipité du milieu réactionnel, lavage éventuel et remise dans l'eau du précipité. La température à laquelle est chauffé le milieu est d'au moins 100°C et encore plus particulièrement d'au moins 130°C. L'opération de chauffage peut être conduite en introduisant le milieu liquide dans une enceinte close (réacteur fermé du type autoclave). Dans les conditions de températures données ci-dessus, et en milieu aqueux, on peut préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote dans ce dernier cas.

La durée du chauffage peut varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

L'étape suivante (d) du procédé consiste à ajouter au précipité issu de l'étape précédente un composé qui est choisi parmi les tensioactifs anioniques, les tensioactifs non ioniques, les polyéthylène-glycols et les acides carboxyliques et leurs sels.

En ce qui concerne ce composé on pourra se référer à l'enseignement de la demande WO-98/45212 et utiliser les tensioactifs décrits dans ce document.

On peut mentionner comme tensioactifs du type anionique les éthoxycarboxylates, les acides gras éthoxylés, les sarcosinates, les esters phosphates, les sulfates comme les sulfates d'alcool les sulfates d'éther alcool et les éthoxylates d'alcanolamide sulfatés, les sulfonates comme les sulfosuccinates, les alkyl benzène ou alkyl naphtalène sulfonates.

Comme tensioactif non ionique on peut mentionner les tensioactifs acétyléniques, les éthoxylates d'alcool, les alcanolamides, les oxydes d'amine, les alcanolamides éthoxylés, les amines éthoxylées à longues chaînes, les copolymères oxyde d'éthylène/oxide de propylène, les dérivés du sorbiatan, l'éthylène glycol, le propylène glycol, le glycérol, les esters polyglyceryle et leurs dérivés éthoxylés, les alkylamines, les alkylimidazolines, les huiles éthoxylées et les éthoxylates d'alkylphénol. On peut citer notamment les produits vendus sous les marques IGEPAL^{®}, DOWANOL^{®}, RHODAMOX^{®} et ALKAMIDE^{®}.

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique. Comme acides dicarboxyliques, on peut mentionner les acides oxalique, malonique, succinique, glutarique, adipique, pimélique, subérique, azélaïque et sébacique.

Les sels des acides carboxyliques peuvent aussi être utilisés, notamment les sels ammoniacaux.

A titre d'exemple, on peut citer plus particulièrement l'acide laurique et le laurate d'ammonium.

Enfin, il est possible d'utiliser un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement -CH₂-COOH.

Ces produits peuvent répondre à la formule :

R₁-O-(CR₂R₃-CR₄R₅-O)ₙ-CH₂-COOH

dans laquelle R₁ désigne une chaîne carbonée, saturée ou insaturée, dont la longueur est généralement d'au plus 22 atomes de carbone, de préférence d'au moins 12 atomes de carbone; R₂, R₃, R₄ et R₅ peuvent être identiques et représenter l'hydrogène ou encore R₂ peut représenter un groupe CH₃ et R₃, R₄ et R₅ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels R₁ peut être saturé et insaturé respectivement ou encore des produits comportant à la fois des groupements -CH₂-CH₂-O- et -C(CH₃)-CH₂-O-.

L'addition du tensio-actif peut se faire de deux manières. Il peut être ajouté directement dans la suspension de précipité issue de l'étape précédente de chauffage (c). Il peut aussi être ajouté au précipité solide après séparation de celui-ci par tout moyen connu du milieu dans lequel a eu lieu le chauffage.

La quantité de tensio-actif utilisée, exprimée en pourcentage en masse de tensio-actif par rapport à la masse de la composition calculée en oxyde, est généralement comprise entre 5% et 100% plus particulièrement entre 15% et 60%.

Dans le cas de l'addition du tensio-actif dans la suspension de précipité, il est possible, après séparation du précipité du milieu liquide, de procéder à un lavage du précipité ainsi obtenu.

Selon une variante du procédé de l'invention, il est possible, à l'issue de l'étape (d) qui vient d'être décrite de procéder à un broyage du précipité.

Ce broyage peut être réalisé de différentes manières.

Une première manière consiste à réaliser un broyage à haute énergie du type broyage humide. Un tel broyage se fait sur un précipité humide qui a été obtenu par exemple après addition du tensio-actif au précipité solide. Le broyage humide peut se faire dans un broyeur à billes par exemple.

Une seconde manière consiste à effectuer un broyage à énergie moyenne en soumettant à un cisaillement une suspension du précipité, par exemple en utilisant un broyeur colloïdal ou une turbine d'agitation. Cette suspension peut être une suspension aqueuse qui a été obtenue après remise en dispersion dans l'eau du précipité obtenu à l'issue des étapes (d).

Dans une dernière étape du procédé selon l'invention, le précipité récupéré est ensuite calciné. Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 500°C et 1100°C plus particulièrement entre 600°C et 900°C.

Les compositions de l'invention telles que décrites plus haut ou telles qu'obtenues dans le procédé étudié précédemment se présentent sous forme de poudres mais elles peuvent éventuellement être mises en forme pour se présenter sous forme de granulés, billes, cylindres ou nids d'abeille de dimensions variables.

Les compositions de l'invention peuvent être utilisées comme catalyseurs ou supports de catalyseur. Ainsi, l'invention concerne aussi des systèmes catalytiques comprenant les compositions de l'invention. Pour de tels systèmes, ces compositions peuvent ainsi être appliquées sur tout support utilisé habituellement dans le domaine de la catalyse, c'est à dire notamment des supports inertes thermiquement. Ce support peut être choisi parmi l'alumine, l'oxyde, de titane, l'oxyde de cérium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Dans le cas de ces utilisations en catalyse, les compositions de l'invention sont employées en combinaison avec des métaux de transition; elles jouent ainsi le rôle de support pour ces métaux. Par métaux de transition, on entend les éléments des groupes IIIA à IIB de la classification périodique. Comme métaux de transition, on peut citer plus particulièrement le fer, le manganèse et le cuivre ainsi que les métaux précieux, comme le platine, le rhodium, le palladium, l'argent ou l'iridium. La nature de ces métaux et les techniques d'incorporation de ceux-ci dans les compositions supports sont bien connues de l'homme du métier. Par exemple, les métaux peuvent être incorporés aux compositions par imprégnation.

Les teneurs en métal précité des composition correspondent aux teneurs généralement utilisées dans les catalyseurs pour obtenir une activité catalytique. A titre d'exemple, cette teneur est d'au plus 5%, notamment d'au plus 1 %. Elle peut être plus particulièrement d'au plus 0,5% et même d'au plus 0,25%. Des teneurs supérieures à 5% n'ont généralement pas d'intérêt d'un point de vue économique. Ces teneurs sont exprimées en pourcentage massique de métal par rapport à la composition.

Les systèmes catalytiques et plus particulièrement les compositions de l'invention peuvent trouver de très nombreuses applications. Ils sont ainsi particulièrement bien adaptés à, et donc utilisables, dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre.

Les systèmes catalytiques et plus particulièrement les compositions de l'invention sont particulièrement bien adaptés au traitement des gaz d'échappement des moteurs à combustion interne comme les moteurs diesel ou essence fonctionnant en régime pauvre. Ce traitement peut être plus précisément un traitement d'élimination des NOx par réaction en continu avec les hydrocarbures en mélange pauvre (Catalyse HC-DeNOx).

De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

On notera enfin que dans un procédé de ce type, les compositions de l'invention peuvent être utilisées en association avec des compositions à base d'oxyde de cérium stabilisé par des additifs comme l'oxyde de zirconium ou comme un oxyde d'une terre rare, l'oxyde de zirconium et l'oxyde de terre rare pouvant être utilisés en combinaison dans ce cas, ou encore en association avec des compositions à base d'oxyde de zirconium, cet oxyde pouvant lui aussi être dopé ou stabilisé par une terre rare, comme le cérium notamment. Ces associations conduisent à des sytèmes permettant une conversion de l'ensemble des polluants émis par un moteur dès les basses températures.

Des exemples vont maintenant être donnés.

### EXEMPLE 1

Cet exemple concerne une composition à 60% de zirconium et 40% de praséodyme, ces proportions étant exprimées en pourcentages massiques des oxydes ZrO₂ et Pr₆O₁₁.

Dans un bécher agité, on introduit 500 ml de nitrate de zirconium (120 g/l) et 80 ml de nitrate de praséodyme (500 g/l). On complète ensuite avec de l'eau distillée de façon à obtenir 1 litre d'une solution de nitrates.

Dans un réacteur agité, on introduit 224 ml d'une solution d'ammoniaque (12 mol/l) et on complète ensuite avec de l'eau distillée de façon à obtenir un volume total de 1 litre.

La solution de nitrates est introduite en une heure dans le réacteur sous agitation constante.

La solution obtenue est placée dans un autoclave en acier inoxydable équipé d'un mobile d'agitation. La température du milieu est portée à 150°C pendant 2 heures sous agitation.

La suspension ainsi obtenue est alors filtrée sur Büchner. On récupère un précipité contenant 19 % en masse d'oxyde.

On prélève 100 g de ce précipité.

Parallèlement, on a préparé un gel de laurate d'ammonium dans les conditions suivantes : on introduit 250 g d'acide laurique dans 135 ml d'ammoniaque (12 mol/l) et 500 ml d'eau distillée, puis on homogénéise à l'aide d'une spatule.

22,7 g de ce gel sont ajoutés à 100 g du précipité puis l'ensemble est malaxé jusqu'à obtention d'une pâte homogène.

Le produit obtenu est ensuite porté à 500°C pendant 4 heures en palier.

Il présente les caractéristiques suivantes de surface :

**Tableau 1**

| Durée/température de calcination | Surface en m²/g |
|---|---|
| 10h/1000°C | 29 |
| 4h/1100°C | 17 |
| 10h/1200°C | 4 |
| 4h/900°C | 55 |

Les analyses RX montrent qu'entre 900°C et 1000°C le produit présente une phase cubique majoritaire et une phase quadratique minoritaire.

Le volume poreux total mesuré est de 0,81 ml/g d'oxyde. Les pores de diamètre compris entre 10 nm et 500 nm constituent 39% du volume poreux total.

### EXEMPLE 2

Cet exemple concerne une composition à 85% de zirconium et 15% de praséodyme, ces proportions étant exprimées en pourcentages massiques des oxydes ZrO₂ et Pr₆O₁₁.

Dans un bécher agité, on introduit 708 ml de nitrate de zirconium (120 g/l) et 30 ml d'une solution de nitrate de praséodyme (500 g/l). On complète ensuite avec de l'eau distillée de façon à obtenir 1 litre d'une solution de nitrates.

Dans un réacteur agité, on introduit 220 ml d'une solution d'ammoniaque et on complète ensuite avec de l'eau distillée de façon à obtenir un volume total de 1 litre.

La solution de nitrates est introduite en une heure dans le réacteur sous agitation constante.

La solution obtenue est placée dans un autoclave en acier inoxydable équipé d'un mobile d'agitation. La température du milieu est portée à 150°C pendant 2 heures sous agitation.

La suspension ainsi obtenue est alors filtrée sur Büchner. On récupère un précipité contenant 17,9 % en masse d'oxyde.

On prélève 100 g de ce précipité.

Parallèlement, on a préparé un gel de laurate d'ammonium dans les conditions suivantes : on introduit 250 g d'acide laurique dans 135 ml d'ammoniaque (12 mol/l) et 500 ml d'eau distillée, puis on homogénéise à l'aide d'une spatule.

21,4 g de ce gel sont ajoutés à 100 g du précipité puis l'ensemble est malaxé jusqu'à obtention d'une pâte homogène.

Le produit obtenu est ensuite porté à 500°C pendant 4 heures en palier.

Il présente les caractéristiques suivantes de surface :

**Tableau 2**

| Durée/température de calcination | Surface en m²/g |
|---|---|
| 10h/1000°C | 41 |
| 4h/1100°C | 19 |
| 10h/1200°C | 3 |
| 4h/900°C | 63 |

Les analyses RX montrent qu'entre 900°C et 1000°C le produit présente une phase quadratique unique.

### EXEMPLE 3

Cet exemple concerne une composition à 90% de zirconium et 10% de praséodyme, ces proportions étant exprimées en pourcentages massiques des oxydes ZrO₂ et Pr₆O₁₁.

On procède de la même manière que dans l'exemple 1.

Les caractéristiques de surface sont données dans le tableau 3 ci-dessous. Les analyses RX montrent qu'entre 900°C et 1000°C le produit présente une phase quadratique unique.

### EXEMPLE 4

Cet exemple concerne une composition à 90% de zirconium et 10% de lanthane, ces proportions étant exprimées en pourcentages massiques des oxydes ZrO₂ et La₂O₃.

On procède de la même manière que dans l'exemple 1.

Les caractéristiques de surface sont données dans le tableau 3 ci-dessous.

### EXEMPLE 5

Cet exemple concerne une composition à 90% de zirconium et 10% de néodyme, ces proportions étant exprimées en pourcentages massiques des oxydes ZrO₂ et Nd₂O₃.

On procède de la même manière que dans l'exemple 1.

Les caractéristiques de surface sont données dans le tableau 3 ci-dessous.

**Tableau 3**

| | Durée/température de calcination | | |
|---|---|---|---|
| | 10h/1000°C | 10h/1200°C | 4h/900°C |
| Surface (m²/g) | | | |
| Exemple | | | |
| 3 | 40 | 2 | 59 |
| 4 | 41 | 2 | 67 |
| 5 | 34 | 4 | 54 |

### EXEMPLE 6

Cet exemple décrit un test catalytique pour un catalyseur préparé à partir d'une composition selon l'invention.

### a) Préparation du catalyseur

Le catalyseur à 0,1% en masse d'élément rhodium métallique par rapport à la masse de l'ensemble du catalyseur est préparé par imprégnation de nitrate de rhodium par voie humide sur le produit de l'exemple 3 obtenu après 4h de calcination à 500°C. On fait subir ensuite au produit imprégné une évaporation lente, un séchage et enfin une calcination 4h à 500°C sous air.

Le catalyseur sous forme de poudre est ensuite vieilli pendant 6 heures à 1100°C sous un mélange oxydo réducteur (flux alternés de 5 minutes de 1,8% de CO et 10% de H₂O d'une part puis de 1,8% de O₂ et 10% de H₂O d'autre part. Le vieillissement se fait dans un réacteur tubulaire en quartz, traversé par le flux de gaz.

### b) Conditions de test

Débit des gaz : 301/h

Masse de catalyseur : 20mg (fraction granulométrique 100-200 microns) dilué avec 150mg de SiC.

La composition des gaz est donnée dans le tableau 4 ci-dessous.

**Tableau 4**

| Composant | Mélange pauvre Richesse : 0, 979 % en volume | Mélange riche Richesse : 1,024 % en volume |
|---|---|---|
| CO₂ | 14,00 | 14,00 |
| H₂O | 10,00 | 10,00 |
| CO | 0,40 | 1,40 |
| O₂ | 0,80 | 0,40 |
| C₃H₆ | 0,0375 | 0,0375 |
| C₃H₈ | 0,0125 | 0,0125 |
| NO | 0,095 | 0,095 |
| N₂ | Complément à 100 | Complément à 100 |

On observe les résultats suivants

En mélange riche, la température d'amorçage à 20% de conversion pour le NO est de 345°C, celle pour le C₃H₆ est de 350°C. Ce sont donc des températures faibles dans les deux cas.

Par ailleurs, la température de demi-conversion (conversion à 50%) pour NO et C₃H₆ est seulement de 360°C. 100% de NO et C₃H₆ sont convertis avant 400°C.

En mélange pauvre, les températures d'amorçage à 20% de conversion pour le NO, pour le C₃H₆ et pour le CO sont respectivement de 310°C, 325°C et 285°C. En outre, pour C₃H₆ 80% de la conversion est obtenue à 500°C.

L'ensemble de ces résultats montre l'efficacité à basses températures des catalyseurs à base des compositions de l'invention.

### EXEMPLE 7 COMPARATIF

On prépare dans cet exemple une composition à base d'oxydes de zirconium et de cérium et dont la surface spécifique est stabilisée par des oxydes de lanthane et de néodyme. Cette composition répond à la formule ZrO₂/CeO₂/La₂O₃/Nd₂O₃ de proportions respectives en poids de ces oxydes de 75/20/2,5/2,5.

On procède comme dans l'exemple 2 en utilisant pour 100 g de produit les quantités suivantes de solutions :
- 268 ml de nitrate de zirconium (C = 280 g/l)
- 79 ml de nitrate de cérium (à une concentration de 236,5 g/l de Ce⁴⁺, de 15,5 g/l de Ce³⁺ et d'acidité libre de 0,7N)
- 5,5 ml de nitrate de lanthane (C = 454 g/l)
- 4,8 ml de nitrate de néodyme (C = 524 g/l)

Le mode de préparation est identique à celui décrit dans l'exemple 2. Toutefois, le précipité n'est pas mélangé au tensio-actif, il est directement calciné. Le produit obtenu après calcination 4 heures à 1000°C présente une surface spécifique de 44 m²/g et après calcination 4 heures à 1100°C une surface spécifique de 18 m²/g. On prépare par ailleurs un catalyseur à 0,1% en masse d'élément rhodium métallique par rapport à la masse de l'ensemble du catalyseur par imprégnation de nitrate de rhodium par voie humide sur la composition préparée de la manière qui vient d'être décrite et obtenu après 4h de calcination à 500°C.

Ce catalyseur ainsi préparé est soumis au même vieillissement à 1100°C et au même test que décrit ci-dessus dans l'exemple 6.

On donne dans le tableau 5 ci-dessous, les résultats concernant les températures d'amorçage à 20 % (Ta) pour les produits des exemples 6 et 7.

**Tableau 5**

| Catalyseur | Ta NO Mélange pauvre (°C) | Ta C₃H₆ Mélange pauvre (°C) | Ta NO Mélange riche (°C) | Ta C₃H₆ Mélange riche (°C) |
|---|---|---|---|---|
| Exemple 7 | 385 | 400 | 405 | 430 |
| Exemple 6 | 310 | 325 | 345 | 350 |

Les températures d'amorçage sont nettement supérieures dans le cas du produit de l'exemple comparatif.

### EXEMPLE 8

Cet exemple concerne une composition à 80% de zirconium et 20% de praséodyme, ces proportions étant exprimées en pourcentages massiques des oxydes ZrO₂ et Pr₆O₁₁.

Dans un bécher, agité, on introduit 276 ml de nitrate de zirconium (290 g/l) et 40 ml de nitrate de praséodyme (500 g/l). On complète ensuite avec de l'eau distillée de façon à obtenir 1 litre d'une solution de nitrates.

Dans un réacteur agité, on introduit 193 ml d'une solution d'ammoniaque (12 mol/l) et on complète ensuite avec de l'eau distillée de façon à obtenir un volume total de 1 litre.

La solution de nitrates est introduite en une heure dans le réacteur sous agitation constante.

La solution obtenue est placée dans un autoclave en acier inoxydable équipé d'un mobile d'agitation. La température du milieu est portée à 150°C pendant 4 heures sous agitation.

On ajoute à la suspension ainsi obtenue 40 grammes d'acide laurique. La suspension est maintenue sous agitation pendant 1 heure.

La suspension est alors filtrée sur Büchner, puis on ajoute sur le précipité filtré l'équivalent en volume des eaux-mères de filtration. On récupère enfin un précipité.

Le produit obtenu est ensuite porté à 700°C pendant 4 heures en palier.

Il présente les caractéristiques suivantes de surface :

**Tableau 6**

| Durée/température de calcination | Surface en m²/g |
|---|---|
| 10h/1000°C | 59 |
| 4h/1100°C | 20 |
| 10h/1200°C | 3 |
| 4h/900°C | 79 |

Les analyses RX montrent qu'entre 900°C et 1000°C le produit présente une phase cubique majoritaire et une phase quadratique minoritaire.

### EXEMPLE 9

Cet exemple concerne une composition à 90% de zirconium et 10% de praséodyme, ces proportions étant exprimées en pourcentages massiques des oxydes ZrO₂ et Pr₆O₁₁.

On procède comme dans l'exemple 1 à deux exceptions près : le tensioactif est ajouté sous forme d'acide laurique (33 grammes) directement dans la suspension issue de l'autoclave et après refroidissement, et la calcination initiale est effectuée à 800°C pendant 3 heures.

Le produit présente les caractéristiques suivantes de surface :

**Tableau 7**

| Durée/température de calcination | Surface en m²/g |
|---|---|
| 10h/1000°C | 38 |
| 4h/1100°C | 20 |
| 10h/1200°C | 2 |
| 4h/900°C | 59 |

Le volume poreux total mesuré est de 1,32 ml/g d'oxyde. Les pores de diamètre compris entre 10 nm et 500 nm constituent 48% du volume poreux total.

## Revendications

1. Composition consistant en de l'oxyde de zirconium et en au moins un additif choisi parmi les oxydes de praséodyme, de lanthane et de néodyme, **caractérisée en ce qu'**elle présente une surface spécifique d'au moins 29 m²/g, après calcination à 1000°C pendant 10 heures.

2. Composition selon la revendication 1, **caractérisée en ce qu'**elle présente une surface spécifique d'au moins 35 m²/g, plus particulièrement d'au moins 40 m²/g après calcination à 1000°C pendant 10 heures.

3. Composition selon la revendication 1 ou 2, **caractérisée en ce qu'**elle présente une surface spécifique d'au moins 50 m²/g après calcination à 1000°C pendant 10 heures.

4. Composition selon l'une des revendications précédentes, **caractérisée en ce qu'**elle présente une surface spécifique d'au moins 10 m²/g après calcination à 1100°C pendant 4 heures.

5. Composition selon l'une des revendications précédentes, **caractérisée en ce qu'**elle présente une surface spécifique d'au moins 15 m²/g après calcination à 1100°C pendant 4 heures.

6. Composition selon l'une des revendications précédentes, **caractérisée en ce qu'**elle présente une surface spécifique d'au moins 2 m²/g, plus particulièrement d'au moins 3 m²/g après calcination à 1200°C pendant 10 heures.

7. Composition selon l'une des revendications précédentes, **caractérisée en ce qu'**elle présente une surface spécifique d'au moins 45 m²/g après calcination à 900°C pendant 4 heures.

8. Composition selon l'une des revendications précédentes, **caractérisée en ce qu'**elle présente une surface spécifique d'au moins 50 m²/g, de préférence d'au moins 55 m²/g, après calcination à 900°C pendant 4 heures.

9. Composition selon l'une des revendications précédentes, **caractérisée en ce que** la teneur en additif est d'au plus 50% en masse d'oxyde d'additif par rapport à la masse de la composition.

10. Composition selon la revendication 9, **caractérisée en ce que** la teneur en additif est comprise entre 10% et 40%.

11. Composition selon la revendication 9, **caractérisée en ce que** la teneur en additif est comprise entre 10% et 30%.

12. Composition selon l'une des revendications précédentes, **caractérisée en ce qu'**elle présente des mésopores dont la taille est comprise entre 10 nm et 500 nm.

13. Composition selon l'une des revendications précédentes, **caractérisée en ce qu'**elle comprend en outre de l'oxyde d'aluminium ou de la silice

14. Procédé de préparation d'une composition selon l'une des revendications précédentes, **caractérisé en ce qu'**il comprend les étapes suivantes :
- (a) on forme un mélange comprenant des composés du zirconium, de l'additif et, le cas échéant, de l'aluminium ou du silicium;
- (b) on met en présence ledit mélange avec un composé basique ce par quoi on obtient un précipité;
- (c) on chauffe en milieu liquide ledit précipité à une température d'au moins 900°C;
- (d) on ajoute au précipité obtenu à l'étape précédente un composé choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (e) on calcine le précipité ainsi obtenu.

15. Procédé selon la revendication précédente, **caractérisé en ce qu'**on utilise comme composés du zirconium, de l'additif et de l'aluminium, des composés choisis parmi les nitrates, les acétates et les chlorures.

16. Procédé selon l'une des revendications 14 ou 15, **caractérisé en ce que** le chauffage du précipité de l'étape (c) est réalisé à une température d'au moins 130°C

17. Système catalytique, **caractérisé en ce qu'**il comprend une composition selon l'une des revendications 1 à 13.

18. Système catalytique selon la revendication 17, **caractérisé en ce qu'**il comprend un métal de transition, notamment un métal précieux, supporté par la composition.

19. Procédé de traitement des gaz d'échappement des moteurs à combustion interne, **caractérisé en ce qu'**on utilise à titre de catalyseur un système catalytique selon la revendication 17 ou 18 ou une composition selon l'une des revendications 1 à 13.

## Claims

1. Composition consisting of zirconium oxide and of at least one additive selected from the oxides of praseodymium, lanthanum and neodymium, **characterized in that** it has a specific surface area of at least 29 m²/g after calcination for 10 hours at 1000°C.

2. Composition according to Claim 1, **characterized in that** it has a specific surface area of at least 35 m²/g, more particularly of at least 40 m²/g, after calcination for 10 hours at 1000°C.

3. Composition according to either of Claims 1 and 2, **characterized in that** it has a specific surface area of at least 50 m²/g after calcination for 10 hours at 1000°C.

4. Composition according to one of the preceding claims, **characterized in that** it has a specific surface area of at least 10 m²/g after calcination for 4 hours at 1100°C.

5. Composition according to one of the preceding claims, **characterized in that** it has a specific surface area of at least 15 m²/g after calcination for 4 hours at 1100°C.

6. Composition according to one of the preceding claims, **characterized in that** it has a specific surface area of at least 2 m²/g, more particularly of at least 3 m²/g, after calcination for 10 hours at 1200°C.

7. Composition according to one of the preceding claims, **characterized in that** it has a specific surface area of at least 45 m²/g after calcination for 4 hours at 900°C.

8. Composition according to one of the preceding claims, **characterized in that** it has a specific surface area of at least 50 m²/g, preferably of at least 55 m²/g , after calcination for 4 hours at 900°C.

9. Composition according to one of the preceding claims, **characterized in that** the additive content does not exceed 50% by weight of additive oxide with respect to the weight of the composition.

10. Composition according to Claim 9, **characterized in that** the additive content is between 10% and 40%.

11. Composition according to Claim 9, **characterized in that** the additive content is between 10% and 30%.

12. Composition according to one of the preceding claims, **characterized in that** it has mesopores between 10 nm and 500 nm in size.

13. Composition according to one of the preceding claims, **characterized in that** it further comprises aluminium oxide or silica.

14. Method for preparing a composition according to one of the preceding claims, **characterized in that** it comprises the following steps:
- (a) a mixture is formed comprising compounds of zirconium, of additive and, if applicable, of aluminium or silicon;
- (b) said mixture is contacted with a basic compound whereby a precipitate is obtained;
- (c) said precipitate is heated in liquid medium at a temperature of at least 100°C;
- (d) a compound is added to the precipitate obtained in the preceding step, selected from anionic surfactants, nonionic surfactants, polyethyleneglycols, carboxylic acids and salts thereof, and surfactants of the carboxymethylated fatty alcohol ethoxylate type;
- (e) the precipitate thereby obtained is calcined.

15. Method according to the preceding claim, **characterized in that** compounds selected from nitrates, acetates and chlorides are used as compounds of zirconium, of additive and of aluminium.

16. Method according to either of Claims 14 and 15, **characterized in that** the heating of the precipitate of step (c) is carried out at a temperature of at least 130°C.

17. Catalytic system, **characterized in that** it comprises a composition according to one of Claims 1 to 13.

18. Catalytic system according to Claim 17, **characterized in that** it comprises a transition metal, particularly a precious metal, supported by the composition.

19. Method for treating exhaust gases of internal combustion engines, **characterized in that** a catalytic system according to either of Claims 17 and 18, or a composition according to one of Claims 1 to 13, is used as the catalyst.

## Patentansprüche

1. Zusammensetzung, bestehend aus Zirconiumoxid und mindestens einem unter den Oxiden von Praseodym, Lanthan und Neodym ausgewählten Additiv, **dadurch gekennzeichnet, daß** sie nach 10 Stunden Calcinierung bei 1000°C eine spezifische Oberfläche von mindestens 29 m²/g aufweist.

2. Zusammensetzung nach Anspruch 1, **dadurch gekennzeichnet, daß** sie nach 10 Stunden Calcinierung bei 1000°C eine spezifische Oberfläche von mindestens 35 m²/g und insbesondere mindestens 40 m²/g aufweist .

3. Zusammensetzung nach Anspruch 1 oder 2, **dadurch gekennzeichnet, daß** sie nach 10 Stunden Calcinierung bei 1000°C eine spezifische Oberfläche von mindestens 50 m²/g aufweist.

4. Zusammensetzung nach einem der vorhergehenden Ansprüche, **dadurch gekennzeichnet, daß** sie nach 4 Stunden Calcinierung bei 1100°C eine spezifische Oberfläche von mindestens 10 m²/g aufweist.

5. Zusammensetzung nach einem der vorhergehenden Ansprüche, **dadurch gekennzeichnet, daß** sie nach 4 Stunden Calcinierung bei 1100°C eine spezifische Oberfläche von mindestens 15 m²/g aufweist.

6. Zusammensetzung nach einem der vorhergehenden Ansprüche, **dadurch gekennzeichnet, daß** sie nach 10 Stunden Calcinierung bei 1200°C eine spezifische Oberfläche von mindestens 2 m²/g und insbesondere mindestens 3 m²/g aufweist.

7. Zusammensetzung nach einem der vorhergehenden Ansprüche, **dadurch gekennzeichnet, daß** sie nach 4 Stunden Calcinierung bei 900°C eine spezifische Oberfläche von mindestens 45 m²/g aufweist.

8. Zusammensetzung nach einem der vorhergehenden Ansprüche, **dadurch gekennzeichnet, daß** sie nach 4 Stunden Calcinierung bei 900°C eine spezifische Oberfläche von mindestens 50 m²/g und vorzugsweise mindestens 55 m²/g aufweist.

9. Zusammensetzung nach einem der vorhergehenden Ansprüche, **dadurch gekennzeichnet, daß** der Additivgehalt höchstens 50 Gew.-% Additivoxid, bezogen auf das Gewicht der Zusammensetzung, beträgt.

10. Zusammensetzung nach Anspruch 9, **dadurch gekennzeichnet; daß** der Additivgehalt zwischen 10% und 40% liegt.

11. Zusammensetzung nach Anspruch 9, **dadurch gekennzeichnet, daß** der Additivgehalt zwischen 10% und 30% liegt.

12. Zusammensetzung nach einem der vorhergehenden Ansprüche, **dadurch gekennzeichnet, daß** sie Mesoporen mit einer Größe zwischen 10 nm und 500 nm aufweist.

13. Zusammensetzung nach einem der vorhergehenden Ansprüche, **dadurch gekennzeichnet, daß** sie außerdem Aluminiumoxid oder Siliciumdioxid enthält.

14. Verfahren zur Herstellung einer Zusammensetzung nach einem der vorhergehenden Ansprüche, **dadurch gekennzeichnet, daß** man:
- (a) eine Mischung bildet, die Zirconium-, Additiv- und gegebenenfalls Aluminium- oder Siliciumverbindungen enthält;
- (b) die Mischung mit einer basischen Verbindung in Berührung bringt, wodurch man einen Niederschlag erhält;
- (c) den Niederschlag in flüssigem Medium auf eine Temperatur von mindestens 100°C erhitzt;
- (d) dem im vorhergehenden Schritt erhaltenen Niederschlag eine unter anionischen Tensiden, nichtionischen Tensiden, Polyethylenglykolen, Carbonsäuren und ihren Salzen und Tensiden vom Typ carboxymethyliertes Fettalkoholethoxylat ausgewählte Verbindung zusetzt;
- (e) den so erhaltenen Niederschlag calciniert.

15. Verfahren nach dem vorhergehenden Anspruch, **dadurch gekennzeichnet, daß** man als Zirconium-, Additiv- und Aluminiumverbindungen unter Nitraten, Acetaten und Chloriden ausgewählte Verbindungen verwendet.

16. Verfahren nach Anspruch 14 oder 15, **dadurch gekennzeichnet, daß** man das Erhitzen des Niederschlags in Schritt (c) bei einer Temperatur von mindestens 130°C durchführt.

17. Katalytisches System, **dadurch gekennzeichnet, daß** es eine Zusammensetzung nach einem der Ansprüche 1 bis 13 umfaßt.

18. Katalytisches System nach Anspruch 17, **dadurch gekennzeichnet, daß** es ein Übergangsmetall, insbesondere ein Edelmetall, das auf der Zusammensetzung geträgert ist, umfaßt.

19. Verfahren zur Behandlung von Abgasen von Verbrennungsmotoren, **dadurch gekennzeichnet, daß** man als Katalysator ein katalytisches System nach Anspruch 17 oder 18 oder eine Zusammensetzung nach einem der Ansprüche 1 bis 13 verwendet.
